# EUROPEAN PATENT APPLICATION

(11) **EP 4 772 452 A1**
(43) Date of publication of application: **08.07.2026**
(21) Application number: 25227076.4
(22) Date of filing: 23.12.2025
(51) Int. Cl.: B65D 33/25

(54) **RESEALABLE ASSEMBLY FOR AN ENCLOSURE INCLUDING A STIFFENING ELEMENT AND METHOD OF MANUFACTURING THE SAME**

(30) Priority: 30.12.2024 US 202463739734 P; 04.12.2025 US 202519409518
(71) Applicant: Illinois Tool Works Inc., Glenview IL 60025 (US)
(72) Inventor: PLOURDE, Eric P., Glenview, 60025 (US)
(74) Representative: HGF

(57) **Abstract**

A resealable assembly of a resealable enlcosure includes a first side including a first base element and first mating components operably coupled with and extending away from an interior surface of the first base element and a second side including a second base element and second mating components operably coupled with and extending away from an interior surface of the second base element. The first mating components and the second mating components are manufactured of a first flexible material. A stiffening element is operably coupled with or disposed within one of the first side of the body or the second side of the body. The stiffening element is manufactured of a second flexible material that has a modulus of elasticity that is greater than a modulus of elasticity of the first flexible material.

## Description

### CROSS-REFERENCE TO RELATED APPLICATIONS

This application claims priority to U.S. Patent Application No. 19/409,518 (filed 4-December-2025), which claims priority to U.S. Provisional Application No. 63/739,734, (filed 30-December-2024), the entire disclosures of which are incorporated herein by reference.

### BACKGROUND

### Technical Field.

The subject matter described herein relates to flexible packaging technologies, specifically to resealable pouch assemblies that include soft-crush zipper assemblies and stiffening elements.

### Discussion of Art.

Flexible enclosures, such as bags and pouches, have been transitioning from multilayer, multi-material film structures to mono-material film structures. These new film structures typically use a single type of material, such as polyethylene or polypropylene, to facilitate recycling. Unlike laminate film structures, which incorporate several different incompatible materials into different film layers, mono-material film structures can be recycled without contaminating the recycled material with incompatible materials, thus providing more sustainable options for flexible packaging.

A zipper assembly may be incorporated into the mono-material enclosure to allow for repeated opening and closing of the enclosure by a consumer. Mono-material films, however, tend to be tough, stretchy, and have high tensile strength. The process of crushing zipper assemblies traditionally manufactured of low-density polyethylene (LDPE) within a mono-material enclosure, however, can result in distortion, burn through, and/or fracturing of the lower-strength mono-material bag films.

One solution may be to manufacture the zipper assembly of a soft-crush resin blend material that has a lower melting temperature, at least partially comprises an LDPE with a vinyl-acetate co-polymer, a high melt index, the material having a high melt flow index, or a metallocene linear low density polyethylene (mLLDPE). However, an undesirable characteristic of the soft-crush resin materials is that they tend to have a lower modulus of elasticity than the LDPE resins typically used in zipper production. The elasticity of the soft-crush resin results in a zipper that stretches when put under tension during production of the flexible enclosure. When tension on the zipper assembly is released, the zipper assembly relaxes and shrinks in length, thereby resulting in wrinkles in the mono-material films of the pouch.

### BRIEF DESCRIPTION

In accordance with one example or aspect, a resealable assembly comprising a first side of a body having a first base element and one or more first mating components operably coupled with and extending away from an interior surface of the first base element. A second side of the body includes a second base element and one or more second mating components operably coupled with and extending away from an interior surface of the second base element. The first mating components and the second mating components are manufactured of a first flexible material. A stiffening element is operably coupled with or disposed within one of the first side of the body or the second side of the body. The stiffening element is manufactured of a second flexible material that has a modulus of elasticity that is greater than a modulus of elasticity of the first flexible material.

In accordance with one example or aspect, a method includes extruding a first base element and a first mating element of a first flexible material. The first mating element extending away from an interior surface of the first base element. A second base element and a second mating element are extruded of the first flexible material. The second mating element extends a distance away from an interior surface of the second base element. A stiffening element is coupled with one of the first base element or the second base element. The stiffening element is manufactured of a second flexible material that has a modulus of elasticity that is greater than a modulus of elasticity of the first flexible material.

In accordance with one example or aspect, a resealable enclosure includes a first side of a body having a first base element and a first mating component operably coupled with and extending away from an interior surface of the first base element. A second side of the body includes a second base element and a second mating component operably coupled with and extending away from an interior surface of the second base element. The first mating component and the second mating component are manufactured of a first flexible material. The resealable enclosure also includes a first sealant layer operably coupled with an exterior surface of the first base element and a second sealant layer operably coupled with an exterior surface of the second base element. One or more stiffening elements are operably coupled with or disposed within one of the first side of the body, the first base element, the first sealant layer, the second side of the body, the second base element, or the second sealant layer. The one or more stiffening elements are manufactured of a second flexible material that has a modulus of elasticity that is greater than a modulus of elasticity of the first flexible material.

While one or more examples of the inventive subject matter described herein are used in connection with resealable enclosures having outer films or walls formed from a mono-material, not all examples of the inventive subject matter are limited to mono-materials unless explicitly limited in that way. For example, one or more examples of the resealable assemblies described herein may include enclosures having multi-material films with zipper assemblies and stiffening elements.

### BRIEF DESCRIPTION OF THE DRAWINGS

The inventive subject matter may be understood from reading the following description of non-limiting embodiments, with reference to the attached drawings, wherein below:
Figure 1 illustrates a front view of a resealable enclosure, according to an embodiment;
Figure 2 illustrates a cross-sectional perspective view of a resealable assembly of the resealable enclosure shown in Figure 1;
Figure 3 illustrates a cross-sectional side view of a resealable assembly in a first state; according to an embodiment;
Figure 4 illustrates a cross-sectional side view of the resealable assembly shown in Figure 3 in a second state; according to an embodiment;
Figure 5 illustrates a cross-sectional perspective view of a resealable assembly, according to an embodiment;
Figure 6 illustrates a cross-sectional perspective view of a resealable assembly, according to an embodiment;
Figure 7 illustrates a cross-sectional side view of a resealable assembly, according to an embodiment;
Figure 8 illustrates a cross-sectional perspective view of a resealable assembly, according to an embodiment; and
Figure 9 illustrates a flow chart of one example of a method for forming a resealable enclosure having a resealable assembly with a stiffening element.

### DETAILED DESCRIPTION

Flexible packaging, such as bags and pouches, has seen a significant shift towards the use of mono-material film structures in recent years. These mono-material films, typically made from polyethylene or polypropylene, offer a more sustainable option for packaging as they can be recycled without contaminating the recycling stream with incompatible materials. This shift addresses the growing demand for environmentally friendly packaging solutions that can be easily recycled.

A mono-material can refer to a packaging material composed entirely of a single type of polymer, such as polyethylene or polypropylene. Unlike traditional multi-layered laminates that incorporate various incompatible materials, mono-material structures utilize a homogeneous composition. This uniformity facilitates recycling processes, as the material can be reintroduced into the recycling stream without the risk of contamination from other polymers. In one or more embodiments, the mono-material may contain one or more additives or additional materials disposed therein, such as anti-slip materials, anti-block materials, or the like. Optionally, the mono-material films may be constructed of multiple layers of the same and/or similar materials.

Mono-material films exhibit high tensile strength and elasticity, making them durable and resistant to tearing. These properties, while beneficial for the integrity of the packaging, pose challenges for incorporating reclose features. In order to form or crush traditional zipper assemblies, manufactured of low-density polyethylene (LDPE) resins, within an enclosure bag or pouch, levels of heat and/or pressure may be necessarily applied which may consequently impact the mono-material films of the enclosure. For example, the mono-material films may become distorted, may burn through, or may fracture when exposed to the levels of heat and/or pressure needed to crush the mating components of the resealable zipper assembly.

The transition to mono-material packaging is at least partially driven by the need to improve the recyclability of flexible packaging. Manufacturers can ensure that the packaging can be processed in existing recycling streams without causing contamination by using a single polymer type. This can reduce the complexity of recycling processes and increase the quality of recycled materials.

Mono-material films present several challenges compared to traditional laminate films, particularly in the assembly of a traditional LDPE reclose zipper assembly with an enclosure formed by mono-material films. One solution may be to manufacture the zipper assembly using a soft-crush resin that may have a lower melting point than standard LDPE resins used for traditional zipper assemblies. However, the soft-crush resins have lower modulus of elasticity compared to standard LDPE resins, and thereby stretch further than traditional LDPE resin zipper assemblies when exposed to heat and/or pressure during the assembly of the resealable enclosure.

The inventive subject matter disclosed herein addresses these challenges by providing a solution that integrates the soft-crush resin material of the reclosable zipper assembly and a stiffening element that controls an amount of stretch of the zipper assembly when exposed to heat and/or pressure levels necessary for the assembly of the pouch. The stiffening element may be incorporated into a base or flange element of the zipper or resealable assembly, into a sealant layer of the assembly, or the like, such that the deforming performance of the mating components of the zipper assembly remain substantially unaffected. The stiffening element may be a second resin blend material that has a modulus of elasticity that is greater than a modulus of elasticity of the resin blend used to manufacture the mating components of the zipper assembly. For example, when exposed to the heat and/or pressure conditions, the stiffening resin controls a level, degree, or stretch of the resealable zipper assembly. This inventive subject matter address the challenges of incorporating a zipper assembly into enclosures manufactured of mono-material films without causing the mono-material films to wrinkle, distort, burn through, or fracture.

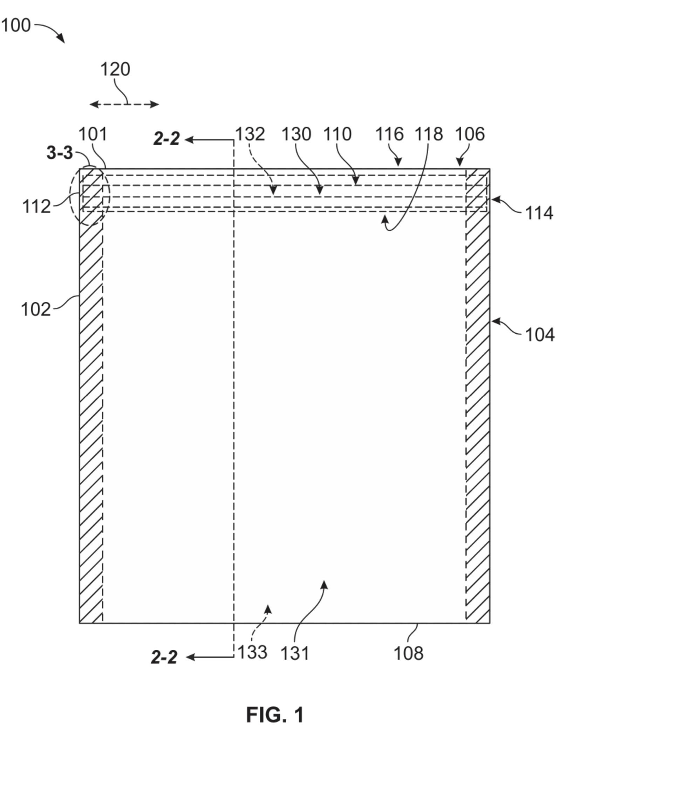

Figure 1 illustrates a front view of one example of a resealable enclosure 100. The enclosure may be a flexible enclosure that includes one or more films formed in the shape of a bag. In the illustrated embodiment, the enclosure 100 includes a body 101 that has a substantially rectangular shape and includes a front side 131 and a back side 133 that are defined and extend between a first edge 102, a second edge 104, a bottom edge 108, and a top edge 106. In alternative embodiments, the enclosure may have any alternative shape, size, and/or form. The enclosure may include an opening disposed proximate to the top edge 106 that may allow a consumer to access an interior cavity (not shown) of the body 101.

One or more mono-material films may form the primary material and the exterior of the resealable enclosure 100. The mono-material films may be formed from a single type of material, such as polyethylene or polypropylene. Alternatively, the films can be formed from two or more materials. In one example, a single film is used to form the enclosure 100. For example, a single film may be folded to form a bend at a lower edge 108 of the enclosure 100. Lateral edges 102, 104 of the folded film can then be sealed together and the top or upper edges 106 of the folded film also can be sealed together to form the enclosure. The edges 102, 104 can be the lateral boundaries of the resealable enclosure 100. Optionally, the enclosure 100 may be formed from multiple films, such as two films facing each other and sealed together along the edges 102, 104, 106, 108 to form the enclosure 100. In one example, the sealed top edge 106 may ensure that the resealable enclosure 100 remains closed until the consumer opens the resealable enclosure 100. The sealed top edge 106 can provide a tamper-evident feature, indicating whether the enclosure 100 has been previously opened.

The enclosure 100 includes a resealable assembly 110 that may be coupled with the films used to form the sides of the body at or near the top edge 106 of the body 101. The resealable assembly 110 may be referred to as a zipper assembly that provides a mechanism for repeated sealing and opening of the enclosure 100. The resealable assembly 110 extends between a first end 112 and a second end 114 in a first direction 120, and between a bottom end 118 and a top end 116. The resealable assembly 110 may attach to itself to allow a consumer to repeatedly open and close the enclosure 100, such as to access an interior cavity of the enclosure. In one or more examples, the resealable assembly 110 may include a feature and/or design that may be repeatedly opened and closed, such as a zipper assembly having one or more mating features or elements.

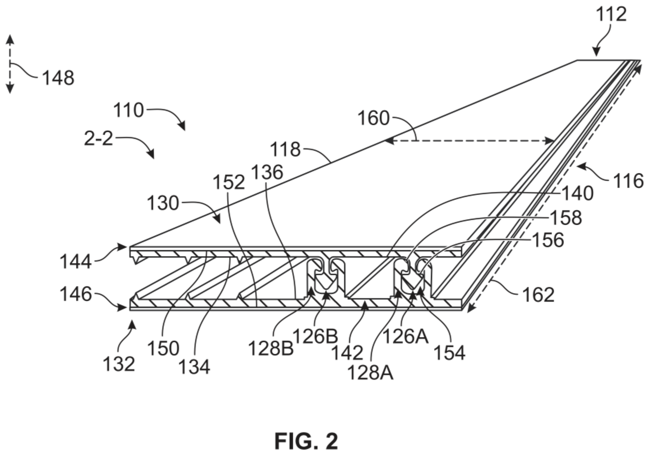

Figure 2 illustrates a cross-sectional perspective view of a portion of the resealable assembly 110 shown in Figure 1. The resealable assembly 110 includes a first side 130 and an opposite second side 132 that extend between the top end 116 and the bottom end 118 along a width 160 of the resealable assembly 110. The first side 130 includes a first base element 140 that may represent a base or a flange element. The first side 130 also includes first mating components 126A, 126B that are operably coupled with an interior surface 134 of the first base element 140 and extend a distance away from the interior surface 134 of the first base element 140 in a second direction 148.

The second side 132 of the resealable assembly 110 includes the second side 132 that includes a second base element 142 that may represent a base or a flange element. The second side 132 includes second mating components 128A, 128B that are operably coupled with an interior surface 136 of the second base element 142 and extend a distance away from the interior surface 136 of the second base element 142 in the second direction 148.

In the illustrated embodiment shown in Figure 2, the first mating component 126A is substantially vertically aligned with the second mating component 128A and the first mating component 126B is substantially vertically aligned with the second mating component 128B. The first mating components 126A, 126B may represent male mating features and the second mating components 128A, 128B may represent female mating features. For example, the first and second mating components may be complementary shaped bodies, such as a protuberance and a groove, which as coupled with different interior surfaces of the enclosure 100 to face each other. Optionally, the first and second mating components may have an alternative design and/or arrangement. For example, the first base element 140 may include one female mating component and one male mating component extending therefrom, and the second base element 142 may include one male mating component and one female mating component extending therefrom, and configured to engage with the mating components of the first base element 140.

In the illustrated embodiment, each of the second mating components include a passage 158 accessing a receiving pocket 154 configured to receive a corresponding first mating component therein. The first mating components include a flange component element 156 configured to engage a portion of a corresponding receiving pocket 154 to maintain a position of the first mating components within the receiving pockets of the second mating components. The first mating components are to be removed from the receiving pockets of the second mating components to allow access to the interior cavity of the resealable enclosure. Additionally, the first mating components are to be inserted into the receiving pockets of the second mating components to prevent access to the interior cavity of the resealable enclosure. For example, the first and second mating components mate and separate to enable the resealable function, allowing the resealable enclosure 100 to be opened and closed multiple times.

In one or more embodiments, the first base element 140 and the first mating components 126A, 126B may be formed together as a unitary structure or element, such as by the same extruding manufacturing tool or die machine, in a single manufactured process. For example, the first base element and the first mating components may be manufactured of the same material. Additionally or alternatively, the second base element 142 and the second mating components 128A, 128B may be formed together as a unitary structure or element, such as by the same extruding manufacturing tool or die machine, in a single manufacturing process, or the like. For example, the second base element and the second mating components may be manufactured of the same material. Alternatively, the first and second mating components and the first and second base elements may be manufactured independently in two different manufacturing processes, and may be operably coupled together during a subsequent secondary coupling manufacturing operation.

In one or more embodiments, the first base element, the first mating components, the second base element, and the second mating components may be manufactured of a first flexible material. The first flexible material may be a resin or resin blend material that may include a low-density polyethylene (LPDE) with a vinyl-acetate co-polymer, a Metallocene linear low density polyethylene (mLLDPE), or the like. For example, the first flexible material may have a melting temperature that is lower than a melting temperature of the mono-material films used to manufacture the sides of the enclosure 100, a modulus of elasticity that is less than a modulus of elasticity of the mono-material films, or the like. For example, the resealable assembly 110, or portions of the resealable assembly 110 may be manufactured of a material that is softer or has a reduced stiffness relative to the mono-material films used to manufacture the sides of the enclosure 100. For example, the first and second mating components may be manufactured of the first flexible material and the first and/or second base elements may be manufactured of the first flexible material.

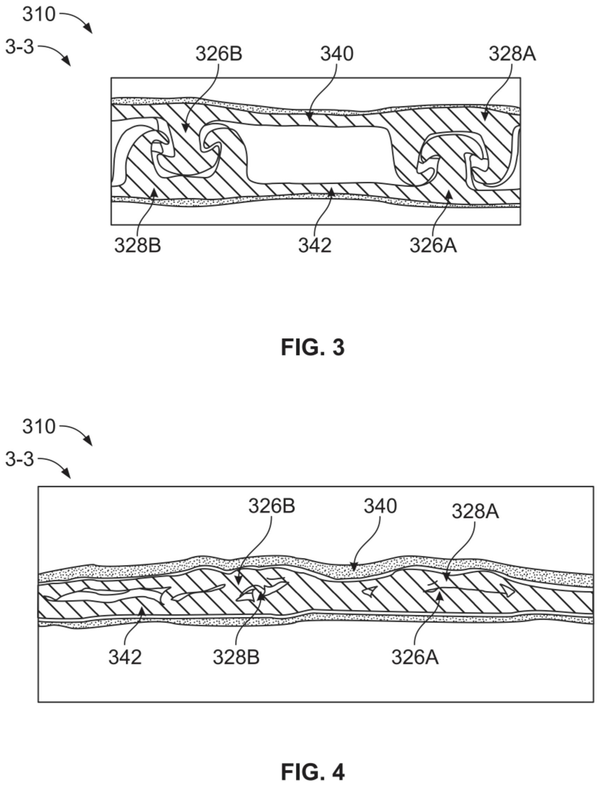

Figure 3 illustrates a cross-sectional side view of a portion of resealable assembly 310 in a first state and Figure 4 illustrates a cross-sectional side view of the portion of the resealable assembly 310 in a second state; according to an embodiment. The portion of the resealable assembly 310 illustrated in Figures 3 and 4 may represent a portion of the resealable assembly that is proximate to the first edge 102 and/or second edge 104 of the enclosure 100 and between the front and back sides 131, 133 of the enclosure 100. The resealable assembly 310 includes a first base element 340 with a first mating component 326B and a second mating component 328A extending from an interior surface of the first base element 340, and a second base element 342 with a first mating component 326A and a second mating component 328B extending from an interior surface of the second base element 342 and facing towards the interior surface of the first base element 340.

In the illustrated embodiment shown in Figure 3 of the resealable assembly in the first state, the male mating features are received within corresponding pockets of the female mating features. During manufacturing of the resealable enclosure, the resealable assembly 310 may be positioned between the front and back sides 131, 133 of the enclosure and disposed proximate to the top edge 106 of the enclosure.

During sealing of the front and back sides 131, 133 of the enclosure along the first and second edges 102, 104, portions of the resealable assembly 310 that are positioned along and/or proximate to the first and second edges 102, 104 may be exposed to heat and/or pressure while the front and back sides 131, 133 of the enclosure are being heat sealed. For example, one or more of heat or pressure are applied to the front and back sides 131, 133 of the enclosure along the first and second edges 102, 104. The heat and/or pressure applied to the edges of the enclosure to seal the enclosure may be applied to portions of the resealable assembly 310, such as portions of the resealable assembly that are positioned along one or more of the edges of the enclosure during sealing of the front and back sides 131, 133 of the enclosure.

During the heat and/or pressure operations, the first and second mating components of the resealable enclosure 310 become deformed, crushed, compressed, reshaped, or the like. Additionally, a shape of the first and second base elements remain substantially unchanged or intact during the heat and/or pressure operations. For example, Figure 4 illustrates the resealable assembly 310 in the second state and subsequent to exposure to the heat and/or pressure operations.

Returning to Figure 2, the resealable assembly 110 may include one or more sealants or sealing materials coupled to the base elements. For example, the first side 130 may include a first sealant layer 144 applied to and/or coupled with an exterior surface 150 of the first base element 140. Additionally or alternatively, the second side 132 may include a second sealant layer 146 applied to and/or coupled with an exterior surface 152 of the second base element 142. In one or more embodiments, the first and second sealant layers may be applied to and/or coupled with at least some of the surfaces of the body 101 of the resealable enclosure 100 such as to control an amount of moisture that may be allowed to move through one or more of the films or other materials used to manufacture the sides of the enclosure 100, or the like.

In one or more embodiments, the resealable assembly 110 may include a stiffening element. The stiffening element may be manufactured of a material that is similar to the first flexible material of the first and second mating components, but may have one or more characteristics that differ from characteristics of the first flexible material. For example, the stiffening element may be included within a portion of the resealable assembly 110 to increase a stiffness of the resealable assembly 110 while maintaining the soft-crush properties of the first and second mating components.

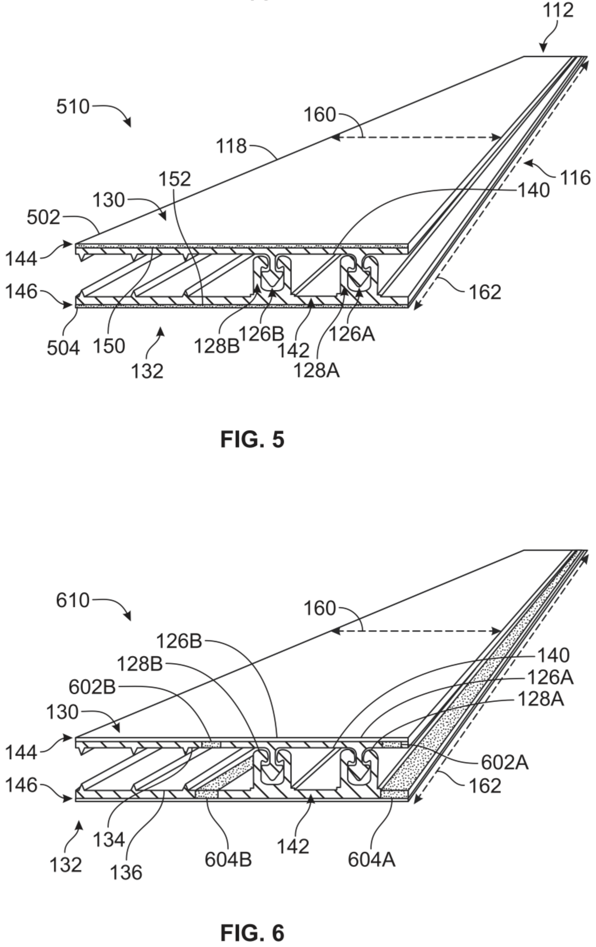

Figure 5 illustrates a cross-sectional perspective view of one example of a resealable assembly 510, according to an embodiment. Like the resealable assembly 110 shown in Figure 2, the assembly includes the first and second base elements 140, 142 and the first and second mating components 126A-B, 128A-B. Additionally, the resealable assembly 510 includes a first stiffening element 502 and a second stiffening element 504. Optionally, the assembly 510 may only include one of the stiffening elements 502, 504. In the illustrated embodiment, the first stiffening element 502 is blended into, mixed into, combined with, formed in unison with, or the like, a material of the first sealant layer 144, and the second stiffening element 504 is blended into, mixed into, combined with, formed in unison with, or the like, a material of the second sealant layer 146. For example, the first sealant layer 144 formed with the first stiffening element 502 may be manufactured together of a second flexible material that is different than the first flexible material of the first base element and the first mating components. Additionally, the second sealant layer 146 formed with the second stiffening element 504 may also be manufactured together of the second flexible material.

In one or more embodiments, second flexible material may be a resin or resin blend material that may include or consist of high-density polyethylene (HDPE), polypropylene (PP)), a cyclic olefin co-polymer (CoC), or other plastic resins or blends that are stiffer or harder relative to the resin blend of the first flexible material. The blend ratio of stiffening resin to a sealant resin of the sealant layers may vary from about 5%/95% to about 50%/50%. At lower percentages of stiffening resin within the second flexible material (e.g., about 5%-20%) the sealing characteristics of the sealant layers (e.g., temperature, pressure, dwell, seal strength, etc.) are substantially unchanged (e.g., within about 1%, about 5%, etc.). Alternatively, at higher percentages of stiffening resin within the second flexible material (e.g., about 40%-50%) the sealing characteristics of the sealant layers decrease at proportional rates relative to the increased percentages of stiffening resin.

The modulus of elasticity of the second flexible material (e.g., used as the stiffening element within the first and second sealant layers) is greater than the modulus of elasticity of the first flexible material (e.g., used to form the first and second base elements and the first and second mating components). For example, the stiffening element incorporated into the first and second sealant layers increases a stiffness (e.g., reduces the elasticity) of the resealable assembly 510 while maintaining the crushing or deforming performance of the first and second mating components. For example, as the percentage of the stiffening resin within the second flexible material increases, the overall stretchiness, elasticity, etc., of the resealable assembly 510 decreases. By keeping the stiffening resin out of the first flexible material (e.g., the first and second mating components and the first and second base elements), the deforming or crushing performance of the mating components during manufacturing of the enclosure 100 remain substantially unchanged.

In the illustrated embodiment of Figure 5, the stiffening resin of the stiffening elements 502, 504 is mixed within the sealant resin of the sealant layers to form a chemically combined stiffening and sealant layer that extends a length 162 and a width 160. In an alternative embodiment, the stiffening elements may be formed separate from the sealant layers and may be subsequently coupled with one or more surfaces of the sealant layers, may extend a portion of the length 162 and/or a portion of the width 160, or any combination therein. For example, the stiffening elements 502, 504 may extend a width that is a fraction of the width 160 of the sealant layers, such as in the shape of a strip that extends a length along a surface of the first and/or second sealant layers.

Figure 6 illustrates a cross-sectional perspective view of one example of a resealable assembly 610, according to another embodiment. Like the resealable assembly 110 shown in Figure 2, the assembly includes the first and second base elements 140, 142 and the first and second mating components 126A-B, 128A-B. Additionally, the resealable assembly 610 includes first stiffening elements 602A, 602B and second stiffening elements 604A, 604B. The first and second stiffening elements may be manufactured of the second flexible material that includes a stiffening resin. For example, the first and second stiffening elements may be extruded or otherwise formed via a separate manufacturing process from the first and second base elements and first and second mating components and may be subsequently coupled to and/or with the first and second base elements as a secondary process.

The first stiffening elements 602A, 602B are operably coupled with the interior surface 134 of the first base element 140 and the second stiffening elements 604A, 604B are operably coupled with the interior surface 136 of the second base element 142. In the illustrated embodiment, the first and second stiffening elements are received into corresponding recesses or pockets of the first and second base elements that extend into the base elements and away from the interior surfaces of the base elements. For example, exterior surfaces of the first and second stiffening elements may be substantially flush with the interior surface of the corresponding first or second base elements.

In the illustrated example, the first and second stiffening elements 602A-B, 604A-B are shaped as strips that have a width that is less than the width 160 of the resealable assembly 610 and extend the length 162. The stiffening elements are positioned along the first and second base elements, respectively, outside of the first and second mating components 126A-B, 128A-B. In one or more embodiments, the resealable assembly 610 may include one or more additional or alternatively stiffening element strips positioned between the first mating components 126A, 126B and/or between the second mating components 128A, 128B.

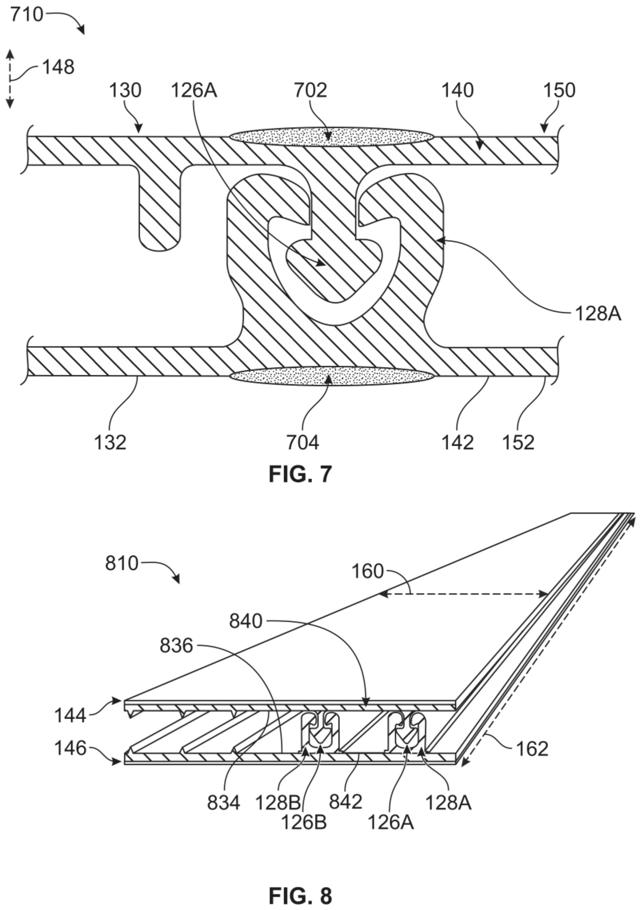

Figure 7 illustrates a cross-sectional view of a resealable assembly 710, according to another embodiment. Like the resealable assembly 110 shown in Figure 2, the assembly 710 includes the first and second base elements 140, 142 and the first and second mating components 126A, 128A. The resealable assembly710 includes a first stiffening element 702 operably coupled with an exterior surface 150 of the first base element 140 and second stiffening element 704 operably coupled with the exterior surface 152 of the second base element 142. Like the stiffening elements 602, 604 shown in Figure 6, the stiffening elements 702, 704 are shaped as strips such that the widths of the stiffening elements are less than the widths of the base elements. The first stiffening element 702 is substantially aligned with the first mating component 126A in the second direction 148 and the second stiffening element 704 is substantially aligned with a passage of the second mating component 128A in the second direction 148. Optionally, one or more stiffening element strips may be offset from the first and/or second mating components.

The first and second stiffening elements 702, 704 may be manufactured of the second flexible material that includes a stiffening resin. For example, the first and second stiffening elements may be extruded or otherwise formed via a separate manufacturing process from the first and second base elements and first and second mating components (e.g., formed of the first flexible material) and subsequently coupled to and/or with the first and second base elements as a secondary process. By keeping the stiffening resin of the second flexible material out of the first and second mating components, the deforming or crushing performance of the first and second mating components during manufacturing of the enclosure remain substantially unchanged.

In one or more examples, the second flexible material used to form the strips of the stiffening elements (e.g., 602A-B, 604A-B, 702, 704) may include a color pigmentation such that a color of the second flexible material is different than a color of the first flexible material. The additional color pigment within the second flexible material resin blend may not change the stiffening characteristics of the stiffening resin, but may provide a visual difference between the stiffening elements and the other elements of the resealable assembly, the enclosure, etc.

Figure 8 illustrates a cross-sectional perspective view of a resealable assembly 810, according to another embodiment. The resealable assembly 810 includes a first base element 840 and a second base element 842. The first sealant layer 144 is operably coupled with an exterior surface of the first base element 840 and the second sealant layer 146 is operably coupled with an exterior surface of the second base element 842.

The resealable assembly 810 also includes first mating components 126A, 126B operably coupled with an interior surface 834 of the first base element 840 and second mating components 128A, 128B operably coupled with an interior surface 836 of the second base element 842. The first and second base elements may be machined, extruded, or otherwise formed in one manufacturing process. The first and second mating components may be machined, extruded, or otherwise formed in a separate manufacturing process and may be subsequently coupled with the first and second base elements, respectively, in a secondary manufacturing process.

The first and second mating components may be manufactured of the first flexible material and the first and second base elements may be manufactured of the second flexible material. For example, different hatch marks illustrated in Figure 8 representing the different components of the resealable assembly 810 may be used to indicate the different materials used to form the resealable assembly 810. The stiffening resin blend may be used to manufacture the first and second base elements such that the first and second base elements have a stiffness that is greater than a stiffness of the first and second mating components. By keeping the stiffening resin of the second flexible material out of the first and second mating components, the deforming or crushing performance of the first and second mating components during manufacturing of the enclosure remain substantially unchanged.

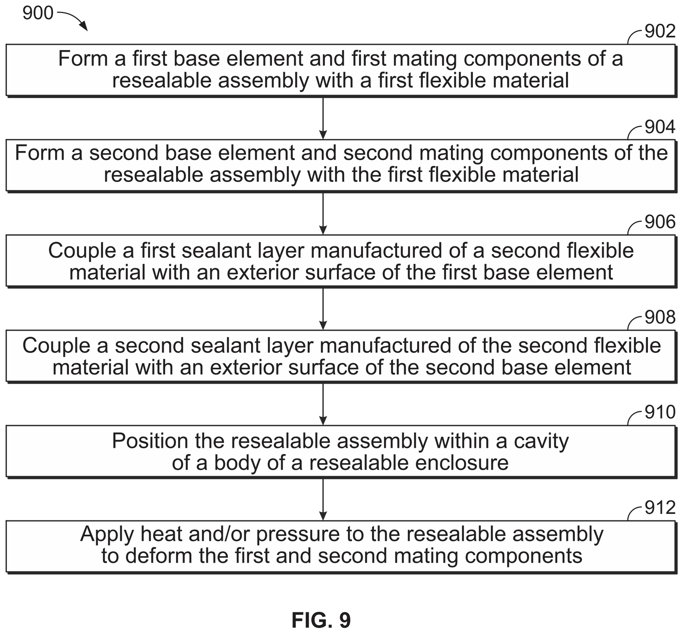

Figure 9 illustrates a flowchart 900 of one example of a method for manufacturing a resealable enclosure with a stiffening element. At 902, a first base element and one or more first mating components may be extruded or otherwise formed together as a single, unitary structure manufactured of a first flexible material. At 904, a second base element and one or more second mating components may be extruded or otherwise formed together as a single, unitary structure manufactured of the first flexible material.

In one or more embodiments, the first flexible material may be a resin or resin blend material that may include a low-density polyethylene (LPDE) with a vinyl-acetate co-polymer, a Metallocene linear low density polyethylene (mLLDPE), or the like. For example, the first flexible material may have a melting temperature that is lower than a melting temperature of the mono-material films used to manufacture the sides of the enclosure, a modulus of elasticity that is less than a modulus of elasticity of the mono-material films, or the like. For example, the first flexible material may be softer or have a reduced stiffness relative to the mono-material film(s) used to manufacture the sides of the enclosure.

At 906, a first sealant layer may be coupled with an exterior surface of the first base element, and at 908 a second sealant layer may be coupled with an exterior surface of the second base element. The first and second sealant layers may include a stiffening element. For example, the first and second sealant layers may be manufactured of a second flexible material that includes a stiffening resin that is combined and/or mixed with a sealant material. The stiffening resin of the stiffening element(s) is mixed within the sealant resin of the first and second sealant layers to form a chemically combined stiffening and sealant layer.

In an alternative embodiment, the stiffening element(s) may be formed as separate components relative to the sealant layers, and operably coupled with the sealant layers in a subsequent manufacturing process. As another example, the stiffening element(s) may be formed as separate or independent components and may be operably coupled with one or more surfaces of the first and/or second base elements, such as illustrated in Figures 6 or 7. As another example, the stiffening elements and the first and second base elements may be formed of the second flexible material and operably coupled with the first and second mating components, such as illustrated in Figure 8.

At 910, the resealable assembly, including the first and second base elements including the first and second sealant layers and stiffening elements and the first and second mating components, is positioned within a cavity of a resealable enclosure, such as the resealable enclosure illustrated in Figure 1. The resealable assembly may be positioned proximate a top side or top edge of the enclosure. The first and second mating components of the resealable assembly may be aligned and engaged. For example, the male mating features may be received within passages of the female mating features.

At 912, one or more of heat or pressure may be applied to the resealable assembly. For example, the heat and/or pressure may be applied to portions of the resealable assembly, such as portions of the resealable assembly that are positioned along one or more edges of the enclosure during sealing of the front and back sides of the enclosure. The heat and/or pressure may cause the male and female mating features to deform, change shapes, crush, or the like. Additionally, one or more characteristics of the stiffening resin used within the second flexible material of the stiffening element may remain substantially unchanged. For example, components of the resealable assembly manufactured of the second flexible material may stretch less than components manufactured of the first flexible material responsive to exposure to the heat and/or pressure applications.

Certain examples of the inventive subject matter described herein provide a resealable assembly comprising a first side of a body having a first base element and one or more first mating components operably coupled with and extending away from an interior surface of the first base element. A second side of the body includes a second base element and one or more second mating components operably coupled with and extending away from an interior surface of the second base element. The first mating components and the second mating components are manufactured of a first flexible material. A stiffening element is operably coupled with or disposed within one of the first side of the body or the second side of the body. The stiffening element is manufactured of a second flexible material that has a modulus of elasticity that is greater than a modulus of elasticity of the first flexible material.

In at least one example, the first side of the body may include a first sealant layer operably coupled with an exterior surface of the first base element and the second side of the body may include a second sealant layer operably coupled with an exterior surface of the second base element. The stiffening element may be disposed within a portion of one or more of the first sealant layer or the second sealant layer.

In at least one example, the stiffening element may be shaped as a strip component that extends along a length of the first sealant layer or a length of the second sealant layer. Optionally, the stiffening element shaped as the strip component may be vertically aligned with one of the one or more first mating components or the one or more second mating components. Optionally, the second flexible material may include a color pigment that is different than a color pigment of the first flexible material.

In at least one example, the stiffening element may be operably coupled with or disposed within a portion of the first base element or the second base element. Optionally, the stiffening element may be shaped as a strip component and may be operably coupled with one of the first base element or the second base element. The strip component may extend along a length of the first base element or the second base element.

In at least one example, the first base element and the second base element are manufactured of the first flexible material. Optionally, the first base element and the second base element may be manufactured of the second flexible material.

In at least one example, the one or more of the first mating components may be male mating features and the one or more second mating components may be female mating features configured to receive the one or more male mating features. Optionally, the one or more male mating features may deform within the one or more female mating features during an assembly operation of the resealable assembly. Optionally, the one or more male mating features may be repeatedly coupled with and separated from the one or more female mating features.

In at least one example, the first side of the body and the second side of the body may define an interior cavity of a resealable enclosure. Optionally, the one or more first mating components may be operably coupled with the one or more second mating components to control access to the interior cavity of the resealable enclosure, or the first mating components may be separated from the second mating components to allow access to the interior cavity of the resealable enclosure. Optionally, a shape of the one or more first mating components and a shape of the one or more second mating components are to change during an assembly operation of the resealable enclosure.

Certain examples of the inventive subject matter described herein provide a method that includes the steps of extruding a first base element and a first mating element of a first flexible material. The first mating element extending away from an interior surface of the first base element. A second base element and a second mating element are extruded of the first flexible material. The second mating element extends a distance away from an interior surface of the second base element. A stiffening element is coupled with one of the first base element or the second base element. The stiffening element is manufactured of a second flexible material that has a modulus of elasticity that is greater than a modulus of elasticity of the first flexible material.

In at least one example, the method may include coupling the first mating element with the second mating element and exposing the first and second mating elements to one or more of heat or pressure to change a shape of the first mating element and a shape of the second mating element.

Certain examples of the inventive subject matter described herein provide a resealable enclosure includes a first side of a body having a first base element and a first mating component operably coupled with and extending away from an interior surface of the first base element. A second side of the body includes a second base element and a second mating component operably coupled with and extending away from an interior surface of the second base element. The first mating component and the second mating component are manufactured of a first flexible material. The resealable enclosure also includes a first sealant layer operably coupled with an exterior surface of the first base element and a second sealant layer operably coupled with an exterior surface of the second base element. One or more stiffening elements are operably coupled with or disposed within one of the first side of the body, the first base element, the first sealant layer, the second side of the body, the second base element, or the second sealant layer. The one or more stiffening elements are manufactured of a second flexible material that has a modulus of elasticity that is greater than a modulus of elasticity of the first flexible material.

In at least one example, a shape of the first mating component and a shape of the second mating component are configured to change during an assembly operation of the resealable enclosure. Optionally, the first mating component may be repeatedly coupled with and separated from the second mating component to control access to an interior cavity of the resealable enclosure defined by the first and second sides of the body.

The singular forms "a," "an," and "the" include plural references unless the context clearly dictates otherwise. "Optional" or "optionally" means that the subsequently described event or circumstance may or may not occur, and that the description may include instances where the event occurs and instances where it does not. Approximating language, as used herein throughout the specification and claims, may be applied to modify any quantitative representation that could permissibly vary without resulting in a change in the basic function to which it may be related. Accordingly, a value modified by a term or terms, such as "about," "substantially," and "approximately," may be not to be limited to the precise value specified. In at least some instances, the approximating language may correspond to the precision of an instrument for measuring the value. Here and throughout the specification and claims, range limitations may be combined and/or interchanged, such ranges may be identified and include all the sub-ranges contained therein unless context or language indicates otherwise.

This written description uses examples to disclose the embodiments to enable a person of ordinary skill in the art to practice the embodiments, including making and using any devices or systems and performing any incorporated methods. The claims define the patentable scope of the disclosure, and include other examples that occur to those of ordinary skill in the art. Such other examples are intended to be within the scope of the claims if they have structural elements that do not differ from the literal language of the claims, or if they include equivalent structural elements with insubstantial differences from the literal language of the claims. Certain embodiments of the invention are described in the following clauses:
Clause 1. A resealable assembly comprising:
   a first side of a body including a first base element and one or more first mating components operably coupled with and extending away from an interior surface of the first base element;
   a second side of the body including a second base element and one or more second mating components operably coupled with and extending away from an interior surface of the second base element, wherein the one or more first mating components and the one or more second mating components are configured to be manufactured of a first flexible material; and
   a stiffening element operably coupled with or disposed within one of the first side of the body or the second side of the body,
   wherein the stiffening element is configured to be manufactured of a second flexible material that has a modulus of elasticity that is greater than a modulus of elasticity of the first flexible material.
Clause 2. The resealable assembly of clause 1, wherein the first side of the body further comprises a first sealant layer configured to be operably coupled with an exterior surface of the first base element and wherein the second side of the body further comprises a second sealant layer configured to be operably coupled with an exterior surface of the second base element, wherein the stiffening element is configured to be disposed within a portion of one or more of the first sealant layer or the second sealant layer.
Clause 3. The resealable assembly of clause 2, wherein the stiffening element is shaped as a strip component configured to extend along a length of the first sealant layer or a length of the second sealant layer.
Clause 4. The resealable assembly of clause 3, wherein the stiffening element shaped as the strip component is configured to be vertically aligned with one of the one or more first mating component or one of the one or more second mating components.
Clause 5. The resealable assembly of clause 3, wherein the second flexible material is configured to include a color pigment that is different than a color pigment of the first flexible material.
Clause 6. The resealable assembly of clause 1, wherein the stiffening element is configured to be operably coupled with or disposed within a portion of the first base element or the second base element.
Clause 7. The resealable assembly of clause 1, wherein the stiffening element is shaped as a strip component configured to be operably coupled with one of the first base element or the second base element, wherein the strip component is configured to extend along a length of the first base element or the second base element.
Clause 8. The resealable assembly of clause 1, wherein the first base element and the second base element are configured to be manufactured of the first flexible material.
Clause 9. The resealable assembly of clause 1, wherein the first base element and the second base element are configured to be manufactured of the second flexible material.
Clause 10. The resealable assembly of clause 1, wherein the one or more first mating components are configured to be male mating features and the one or more second mating components are configured to be female mating features configured to receive the one or more male mating features.
Clause 11. The resealable assembly of clause 10, wherein the one or more male mating features are configured to be deformed within the one or more female mating features during an assembly operation of the resealable assembly.
Clause 12. The resealable assembly of clause 10, wherein the one or more male mating features are configured to be repeatedly coupled with and separated from the one or more female mating features.
Clause 13. The resealable assembly of clause 1, wherein the first side of the body and the second side of the body are configured to define an interior cavity of a resealable enclosure.
Clause 14. The resealable assembly of clause 13, wherein the one or more first mating components are configured to be operably coupled with the one or more second mating components to control access to the interior cavity of the resealable enclosure, or the one or more first mating components are configured to be separated from the one or more second mating components to allow access to the interior cavity of the resealable enclosure.
Clause 15. The resealable assembly of clause 13, wherein a shape of the one or more first mating components and a shape of the one or more second mating components are configured to change during an assembly operation of the resealable enclosure.
Clause 16. A method, comprising:
   extruding a first base element and a first mating element of a first flexible material, the first mating element extending away from an interior surface of the first base element;
   extruding a second base element and a second mating element of the first flexible material, the second mating element extending away from an interior surface of the second base element; and
   coupling a stiffening element with one of the first base element or the second base element, wherein the stiffening element is configured to be manufactured of a second flexible material that has a modulus of elasticity that is greater than a modulus of elasticity of the first flexible material.
Clause 17. The method of clause 16, further comprising:
   coupling the first mating element with the second mating element; and
   exposing the first and second mating elements to one or more of heat or pressure to change a shape of the first mating element and a shape of the second mating element.
Clause 18. A resealable enclosure, comprising:
   a first side of a body including a first base element and a first mating component operably coupled with and extending away from an interior surface of the first base element;
   a second side of the body including a second base element and a second mating component operably coupled with and extending away from an interior surface of the second base element, wherein the first mating component and the second mating component are configured to be manufactured of a first flexible material;
   a first sealant layer configured to be operably coupled with an exterior surface of the first base element;
   a second sealant layer configured to be operably coupled with an exterior surface of the second base element; and
   one or more stiffening elements operably coupled with or disposed within one or more of the first side of the body, the first base element, the first sealant layer, the second side of the body, the second base element, or the second sealant layer,
   wherein the one or more stiffening elements are configured to be manufactured of a second flexible material that has a modulus of elasticity that is greater than a modulus of elasticity of the first flexible material.
Clause 19. The resealable assembly of clause 18, wherein a shape of the first mating component and a shape of the second mating component are configured to change during an assembly operation of the resealable enclosure.
Clause 20. The resealable assembly of clause 19, wherein the first mating component is configured to be repeatedly coupled with and separated from the second mating component to control access to an interior cavity of the resealable enclosure defined at least in part by the first and second sides of the body.

## Claims

1. A resealable assembly comprising:
a first side of a body including a first base element and one or more first mating components operably coupled with and extending away from an interior surface of the first base element;
a second side of the body including a second base element and one or more second mating components operably coupled with and extending away from an interior surface of the second base element, wherein the one or more first mating components and the one or more second mating components are configured to be manufactured of a first flexible material; and
a stiffening element operably coupled with or disposed within one of the first side of the body or the second side of the body,
wherein the stiffening element is configured to be manufactured of a second flexible material that has a modulus of elasticity that is greater than a modulus of elasticity of the first flexible material.

2. The resealable assembly of claim 1, wherein the first side of the body further comprises a first sealant layer configured to be operably coupled with an exterior surface of the first base element and wherein the second side of the body further comprises a second sealant layer configured to be operably coupled with an exterior surface of the second base element, wherein the stiffening element is configured to be disposed within a portion of one or more of the first sealant layer or the second sealant layer.

3. The resealable assembly of claim 2, wherein the stiffening element is shaped as a strip component configured to extend along a length of the first sealant layer or a length of the second sealant layer.

4. The resealable assembly of claim 3, wherein the stiffening element shaped as the strip component is configured to be vertically aligned with one of the one or more first mating component or one of the one or more second mating components, and/or
wherein the second flexible material is configured to include a color pigment that is different than a color pigment of the first flexible material.

5. The resealable assembly of any one of claims 1 to 4, wherein the stiffening element is configured to be operably coupled with or disposed within a portion of the first base element or the second base element.

6. The resealable assembly of any one of claims 1 to 5, wherein the stiffening element is shaped as a strip component configured to be operably coupled with one of the first base element or the second base element, wherein the strip component is configured to extend along a length of the first base element or the second base element.

7. The resealable assembly of any one of claims 1 to 6, wherein the first base element and the second base element are configured to be manufactured of the first flexible material, or
wherein the first base element and the second base element are configured to be manufactured of the second flexible material.

8. The resealable assembly of any one of claims 1 to 7, wherein the one or more first mating components are configured to be male mating features and the one or more second mating components are configured to be female mating features configured to receive the one or more male mating features.

9. The resealable assembly of claim 8, wherein the one or more male mating features are configured to be deformed within the one or more female mating features during an assembly operation of the resealable assembly, and/or
wherein the one or more male mating features are configured to be repeatedly coupled with and separated from the one or more female mating features.

10. The resealable assembly of any one of claims 1 to 9, wherein the first side of the body and the second side of the body are configured to define an interior cavity of a resealable enclosure.

11. The resealable assembly of claim 10, wherein the one or more first mating components are configured to be operably coupled with the one or more second mating components to control access to the interior cavity of the resealable enclosure, or the one or more first mating components are configured to be separated from the one or more second mating components to allow access to the interior cavity of the resealable enclosure, and/or
wherein a shape of the one or more first mating components and a shape of the one or more second mating components are configured to change during an assembly operation of the resealable enclosure.

12. A method, comprising:
extruding a first base element and a first mating element of a first flexible material, the first mating element extending away from an interior surface of the first base element;
extruding a second base element and a second mating element of the first flexible material, the second mating element extending away from an interior surface of the second base element; and
coupling a stiffening element with one of the first base element or the second base element, wherein the stiffening element is configured to be manufactured of a second flexible material that has a modulus of elasticity that is greater than a modulus of elasticity of the first flexible material.

13. The method of claim 12, further comprising:
coupling the first mating element with the second mating element; and
exposing the first and second mating elements to one or more of heat or pressure to change a shape of the first mating element and a shape of the second mating element.

14. A resealable enclosure, comprising:
a first side of a body including a first base element and a first mating component operably coupled with and extending away from an interior surface of the first base element;
a second side of the body including a second base element and a second mating component operably coupled with and extending away from an interior surface of the second base element, wherein the first mating component and the second mating component are configured to be manufactured of a first flexible material;
a first sealant layer configured to be operably coupled with an exterior surface of the first base element;
a second sealant layer configured to be operably coupled with an exterior surface of the second base element; and
one or more stiffening elements operably coupled with or disposed within one or more of the first side of the body, the first base element, the first sealant layer, the second side of the body, the second base element, or the second sealant layer,
wherein the one or more stiffening elements are configured to be manufactured of a second flexible material that has a modulus of elasticity that is greater than a modulus of elasticity of the first flexible material.

15. The resealable assembly of claim 14, wherein a shape of the first mating component and a shape of the second mating component are configured to change during an assembly operation of the resealable enclosure, and/or
wherein the first mating component is configured to be repeatedly coupled with and separated from the second mating component to control access to an interior cavity of the resealable enclosure defined at least in part by the first and second sides of the body.
